(19) Europäisches Patentamt
European Patent Office
Office européen des brevets

(11) EP 3 421 544 A1

(12) # EUROPEAN PATENT APPLICATION

published in accordance with Art. 153(4) EPC

(43) Date of publication:
**02.01.2019 Bulletin 2019/01**

(21) Application number: **17756456.4**

(22) Date of filing: **21.02.2017**

(51) Int Cl.:
***C08L 77/00*** *(2006.01)* ***A44B 1/02*** *(2006.01)*
***A44B 19/16*** *(2006.01)* ***C08G 69/40*** *(2006.01)*
***C08K 3/32*** *(2006.01)* ***D01F 6/60*** *(2006.01)*

(86) International application number:
**PCT/JP2017/006288**

(87) International publication number:
**WO 2017/146018 (31.08.2017 Gazette 2017/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.02.2016 JP 2016032233**

(71) Applicant: **UBE Industries, Ltd.**
**Ube-shi, Yamaguchi 755-8633 (JP)**

(72) Inventors:
- **HARA Yoshitomo**
**Ube-shi**
**Yamaguchi 755-8633 (JP)**
- **FUJIMURA Hideki**
**Ube-shi**
**Yamaguchi 755-8633 (JP)**
- **MORIYAMA Toshio**
**Ube-shi**
**Yamaguchi 755-8633 (JP)**

(74) Representative: **Hoffmann Eitle**
**Patent- und Rechtsanwälte PartmbB**
**Arabellastraße 30**
**81925 München (DE)**

(54) **POLYAMIDE ELASTOMER COMPOSITION, AND FIBER AND MOLDED ARTICLE COMPRISING SAME**

(57) Provided is a polyamide elastomer composition having excellent stability in various molding and excellent dyeing properties as well as excellent color fastness properties. A polyamide elastomer composition which comprises a polyamide elastomer and a phosphorous acid compound, wherein the polyamide elastomer comprises constituent units 1 derived from a diamine compound represented by the formula (1) below, constituent units 2 derived from an aminocarboxylic acid compound represented by the formula (2) below or a lactam compound represented by the formula (3) below, and constituent units 3 derived from a dicarboxylic acid compound represented by the formula (4) below, wherein the content of the phosphorous acid compound in the polyamide elastomer is 0.02 to 0.15% by mass, and wherein the polyamide elastomer has a terminal amino group concentration of $2.0 \times 10^{-5}$ eq/g or more (x represents an integer of 1 to 20, y represents an integer of 4 to 50, z represents an integer of 1 to 20, $R^1$ represents a linking group comprising a hydrocarbon chain, $R^2$ represents a linking group comprising a hydrocarbon chain, $R^3$ represents a linking group comprising a hydrocarbon chain, and m represents 0 or 1).

EP 3 421 544 A1

**Description**

FIELD OF THE INVENTION

The present invention relates to a polyamide elastomer composition. In addition, the present invention is concerned with a fiber and a molded body each comprising the polyamide elastomer composition.

BACKGROUND ART

Thermoplastic elastomers have been put on the market in the form of resin compositions of various types, such as urethane, styrene, ester, and amide, and have excellent properties, such as high flexibility, high stretchability, and low specific gravity, and therefore they are applied not only to functional fibers but also to buttons, slide fasteners, collars and others for clothing, and thus have been widely used.

Particularly, in recent years, there are increasing demands for clothing products which are fashionable and functional. Especially, the use of thermoplastic polyurethane is expanding, and, in the use as stockings and pantyhose, polyurethane elastic fibers having high stretchability and elastic recovery are widely used. Further, polyurethane is also applied to buttons for clothing. However, the polyurethane has so poor weathering resistance that the physical properties markedly deteriorate after being used for a long term. In addition, the polyurethane has poor dyeing properties and needs a special dyeing method, and further has low reactivity with a dye such that the dye is very likely to be removed, and thus the color fastness of the polyurethane is unsatisfactory. For this reason, it is difficult to apply the polyurethane to the use which needs color development for various colors.

In connection with the above, with respect to the elastic yarn, a polyether ester amide elastomer elastic yarn having specific structural units has been proposed, and has been reported to have excellent softening temperature, elastic recovery, and heat resistance (see, for example, patent document 1). Further, a polyamide thermoplastic elastomer comprising an ionomer resin, and a copolymer of an $\alpha$-olefin and an unsaturated glycidyl compound has been proposed, and has been reported to have improved permanent compression set (see, for example, patent document 2).

On the other hand, as a method for producing a polyether amide elastomer having excellent melt moldability and fabricability, and having excellent strong toughness, resistance to fatigue from flexing, impact resilience, flexibility at low temperatures, sound deadening characteristics, and elastomeric properties as well as a low specific gravity, a method in which monomers are subjected to melt polycondensation in the presence of a phosphorus atom-containing compound has been proposed (see, for example, patent document 3).

PRIOR ART REFERENCES

Patent Documents

Patent document 1: Japanese Unexamined Patent Publication No. Hei 10-8324
Patent document 2: Japanese Unexamined Patent Publication No. 2003-221493
Patent document 3: Japanese Unexamined Patent Publication No. 2011-256364

SUMMARY OF THE INVENTION

Problems to be Solved by the Invention

However, the elastic yarn described in patent document 1 has an unsatisfactory affinity with an acid dye and the dyeing properties of the yarn are not satisfactory as mentioned above, and thus it was difficult to apply this elastic yarn to the clothing use. Further, the spinning step for the elastic yarn is required to achieve stable spinning operation properties for a long time, but it is likely that satisfactorily stable productivity cannot be achieved in the spinning step. On the other hand, the thermoplastic elastomer described in patent document 2 is not expected to be applied to the clothing use as fibers and others, and further the dyeing properties of the elastomer are not satisfactory.

That is, various studies have conventionally been made on polymers having stretchability, but a resin composition having both excellent production stability and excellent dyeing properties has not yet been obtained.

An object of the present invention is to provide a polyamide elastomer composition having excellent stable productivity in various molding and excellent dyeing properties as well as excellent color fastness properties. Another object is to provide a method for commercially producing a fiber comprising a polyamide elastomer.

Means for Solving the Problems

Specific means for solving the above-mentioned problems is as described below, and the present invention encompasses the following embodiments.

[1] A polyamide elastomer composition which comprises a polyamide elastomer and a phosphorous acid compound, wherein the polyamide elastomer comprises constituent units 1 derived from a diamine compound represented by the formula (1) below, constituent units 2 derived from an aminocarboxylic acid compound represented by the formula (2) below or a lactam compound represented by the formula (3) below, and constituent units 3 derived from a dicarboxylic acid compound represented by the formula (4) below,
wherein the content of the phosphorous acid compound in the polyamide elastomer is 0.02 to 0.15% by mass, and wherein the polyamide elastomer has a terminal amino group concentration of $2.0 \times 10^{-5}$ eq/g or more:

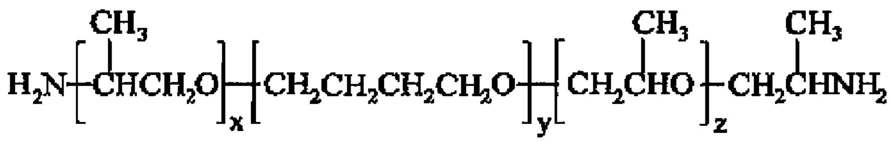

(1)

$H_2N-R^1-COOH$ (2)

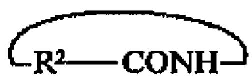

(3)

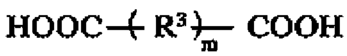

(4)

wherein x represents an integer of 1 to 20, y represents an integer of 4 to 50, z represents an integer of 1 to 20, $R^1$ represents a linking group comprising a hydrocarbon chain, $R^2$ represents a linking group comprising a hydrocarbon chain, $R^3$ represents a linking group comprising a hydrocarbon chain, and m represents 0 or 1.
[2] A molded body comprising the polyamide elastomer composition.
[3] A polyamide elastomer fiber comprising the polyamide elastomer composition.
[4] A button for clothing comprising the polyamide elastomer composition.
[5] A slide fastener for clothing having a member comprising the polyamide elastomer composition.
[6] Use of the polyamide elastomer composition for continuous melt spinning.
[7] A method for producing the polyamide elastomer fiber, wherein the method comprises subjecting a diamine compound represented by the formula (1) above, an aminocarboxylic acid compound represented by the formula (2) above and/or a lactam compound represented by the formula (3) above, and a dicarboxylic acid compound represented by the formula (4) above to melt polymerization in the presence of a phosphorous acid compound to obtain a polyamide elastomer, and melt spinning a resin composition containing the obtained polyamide elastomer.

Effects of the Invention

In the present invention, there can be provided a polyamide elastomer composition having excellent production stability in various molding and excellent dyeing properties as well as excellent color fastness properties. Particularly, by using the thermoplastic elastomer in the present invention, a long-time continuous operation can be easily done when industrially producing a fiber using a spinning apparatus.

MODE FOR CARRYING OUT THE INVENTION

In the present specification, with respect to the amount of the component contained in the composition, when a plurality of materials corresponding to the components are present in the composition, the amount of the components in the composition means the total amount of the materials present in the composition unless otherwise specified.

[Polyamide elastomer composition]

The polyamide elastomer composition according to the present embodiment comprises a polyamide elastomer and a phosphorous acid compound. The polyamide elastomer comprises constituent units 1 derived from a diamine compound represented by the formula (1) below, constituent units 2 derived from an aminocarboxylic acid compound represented by the formula (2) below or a lactam compound represented by the formula (3) below, and constituent units 3 derived from a dicarboxylic acid compound represented by the formula (4) below, and has a terminal amino group concentration of $2.0 \times 10^{-5}$ eq/g or more. Further, in the polyamide elastomer composition, the content of the phosphorous acid in the polyamide elastomer is 0.02 to 0.15% by mass.

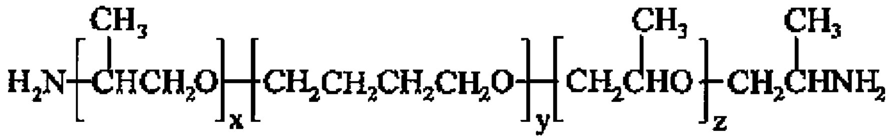 (1)

$H_2N-R^1-COOH$ (2)

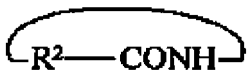 (3)

$HOOC-(R^3)_m-COOH$ (4)

Wherein x represents an integer of 1 to 20, y represents an integer of 4 to 50, z represents an integer of 1 to 20, $R^1$ represents a linking group comprising a hydrocarbon chain, $R^2$ represents a linking group comprising a hydrocarbon chain, $R^3$ represents a linking group comprising a hydrocarbon chain, and m represents 0 or 1.

Constituent units 1

The polyamide elastomer comprises at least one type of constituent units 1 derived from a diamine compound represented by the formula (1) above. The diamine compound represented by the formula (1) above is an XYX triblock polyether diamine compound, and, for example, there can be mentioned a polyether diamine which is produced by adding propylene oxide to, e.g., poly(oxytetramethylene) glycol at both ends to form polypropylene glycol, and then reacting, e.g., ammonia with the polypropylene glycol at an end.

In the XYX triblock polyether diamine compound, from the viewpoint of surely achieving stable properties including elastomeric properties and improving the compatibility with the below-mentioned polyamide component to surely obtain a tough polyether amide elastomer, x and z are generally 1 to 20, preferably 1 to 18, more preferably 1 to 16, further preferably 1 to 14, especially preferably 1 to 12. y is generally 4 to 50, preferably 5 to 45, more preferably 6 to 40, further preferably 7 to 35, especially preferably 8 to 30.

Specific examples of XYX triblock polyether diamine compounds include:

XTJ-533 (compound of the formula (1) wherein x is about 12, y is about 11, and z is about 11),
XTJ-536 (compound of the formula (1) wherein x is about 8.5, y is about 17, and z is about 7.5),
XTJ-542 (compound of the formula (1) wherein x is about 3, y is about 9, and z is about 2),
XTJ-559 (compound of the formula (1) wherein x is about 3, y is about 14, and z is about 2), and
RT-1000 (compound of the formula (1) wherein x is about 3, y is about 9, and z is about 2), each of which is manufactured by HUNTSMAN Corporation, U.S.A.

Further, with respect to the XYX triblock polyether diamine compound, for example,

XYX-1 (compound of the formula (1) wherein x is about 3, y is about 14, and z is about 2),
XYX-2 (compound of the formula (1) wherein x is about 5, y is about 14, and z is about 2), or
XYX-3 (compound of the formula (1) wherein x is about 3, y is about 19, and z is about 2) can be used.

These can be used individually or in combination.

The polyamide elastomer may comprise, in addition to constituent units 1 derived from a diamine compound represented by the formula (1), constituent units 1a derived from another diamine compound. Examples of other diamine compounds include branched saturated diamines having 6 to 22 carbon atoms, branched alicyclic diamines having 6 to 16 carbon atoms, norbornanediamines, linear aliphatic diamines having 2 to 20 carbon atoms, linear alicyclic diamines having 6 to 16 carbon atoms, and aromatic diamines.

Examples of branched saturated diamines having 6 to 22 carbon atoms include 2,2,4-trimethyl-1,6-diaminohexane, 2,4,4-trimethyl-1,6-diaminohexane, 2-methyl-1,5-diaminopentane, and 2-methyl-1,8-diaminooctane.

Examples of branched alicyclic diamines having 6 to 16 carbon atoms include 5-amino-2,2,4-trimethyl-1-cyclopentanemethylamine and 5 -amino-1,3,3-trimethylcyclohexanemethylamine (which is referred to also as "isophoronediamine"). These diamines may be any of a cis isomer and a trans isomer, or may be a mixture of these isomers.

Examples of norbornanediamines include 2,5-norbornanedimethylamine and 2,6-norbornanedimethylamine.

Examples of linear aliphatic diamines having 2 to 20 carbon atoms include 1,2-diaminoethane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, and 1,12-diaminododecane.

Examples of linear alicyclic diamines having 6 to 16 carbon atoms include bis(4-aminocyclohexyl)methane, bis(4-aminocyclohexyl)propane, bis(3-methyl-4-aminocyclohexyl)methane, bis(3-methyl-4-aminocyclohexyl)propane, 1,3-/1,4-bisaminomethylcyclohexane, bis(aminopropyl)piperazine, bis(aminoethyl)piperazine, and tricyclodecanedimethylamine. These can be used individually or in combination.

Examples of aromatic diamines include m-/p-xylylenediamine.

These other diamine compounds can be used individually or in combination.

Constituent units 2

The polyamide elastomer comprises at least one type of constituent units 2 derived from an aminocarboxylic acid compound represented by the formula (2) above or a lactam compound represented by the formula (3) below.

In the aminocarboxylic acid compound represented by the formula (2), from the viewpoint of surely achieving mechanical physical properties of a resin composition containing the polyether amide elastomer, such as a stable strength and elastic modulus, $R^1$ is preferably an aliphatic hydrocarbon group having 2 to 20 carbon atoms, or an alicyclic or aromatic hydrocarbon group having 6 to 20 carbon atoms, more preferably an alkylene group having 2 to 20 carbon atoms.

$R^1$ is preferably an aliphatic hydrocarbon group having 3 to 18 carbon atoms, or an alicyclic or aromatic hydrocarbon group having 6 to 18 carbon atoms, more preferably an alkylene group having 3 to 18 carbon atoms.

$R^1$ is preferably an aliphatic hydrocarbon group having 4 to 15 carbon atoms, or an alicyclic or aromatic hydrocarbon group having 6 to 15 carbon atoms, more preferably an alkylene group having 4 to 15 carbon atoms.

$R^1$ is preferably an aliphatic hydrocarbon group having 10 to 15 carbon atoms, or an alicyclic or aromatic hydrocarbon group having 6 to 15 carbon atoms, more preferably an alkylene group having 10 to 15 carbon atoms.

Examples of aminocarboxylic acid compounds represented by the formula (2) include aliphatic aminocarboxylic acids having 3 to 18 carbon atoms, such as 6-aminocaproic acid, 7-aminoheptanoic acid, 8-aminooctanoic acid, 10-aminocapric acid, 11-aminoundecanoic acid, and 12-aminododecanoic acid. These can be used individually or in combination.

In the lactam compound represented by the formula (3), from the viewpoint of surely achieving mechanical physical properties of a resin composition containing the polyether amide elastomer, such as a stable strength and elastic modulus, $R^2$ is preferably an aliphatic hydrocarbon group having 3 to 20 carbon atoms, or an alicyclic or aromatic hydrocarbon group having 6 to 20 carbon atoms, more preferably an alkylene group having 3 to 20 carbon atoms.

$R^2$ is preferably an aliphatic hydrocarbon group having 3 to 18 carbon atoms, or an alicyclic or aromatic hydrocarbon group having 6 to 18 carbon atoms, more preferably an alkylene group having 3 to 18 carbon atoms.

$R^2$ is preferably an aliphatic hydrocarbon group having 4 to 15 carbon atoms, or an alicyclic or aromatic hydrocarbon group having 6 to 15 carbon atoms, more preferably an alkylene group having 4 to 15 carbon atoms.

$R^2$ is preferably an aliphatic hydrocarbon group having 10 to 15 carbon atoms, or an alicyclic or aromatic hydrocarbon group having 6 to 15 carbon atoms, more preferably an alkylene group having 10 to 15 carbon atoms.

Examples of lactam compounds represented by the formula (3) include aliphatic lactams having 3 to 18 carbon atoms, such as caprolactam, enanthlactam, undecalactam, dodecalactam, and 2-pyrrolidone. These can be used individually or in combination.

Constituent units 3

The polyamide elastomer comprises at least one type of constituent units 3 derived from a dicarboxylic acid compound represented by the formula (4) above.

In the dicarboxylic acid compound represented by the formula (4), from the viewpoint of surely achieving stable elastomeric properties and flexibility of a resin composition containing the polyether amide elastomer, $R^3$ is preferably an aliphatic hydrocarbon group having 1 to 20 carbon atoms, or an alicyclic or aromatic hydrocarbon group having 6 to 20 carbon atoms, more preferably an alkylene group having 1 to 20 carbon atoms.

$R^3$ is preferably an aliphatic hydrocarbon group having 1 to 15 carbon atoms, or an alicyclic or aromatic hydrocarbon group having 6 to 15 carbon atoms, more preferably an alkylene group having 1 to 15 carbon atoms.

$R^3$ is preferably an aliphatic hydrocarbon group having 2 to 12 carbon atoms, or an alicyclic or aromatic hydrocarbon group having 6 to 12 carbon atoms, more preferably an alkylene group having 2 to 12 carbon atoms.

$R^3$ is preferably an aliphatic hydrocarbon group having 4 to 10 carbon atoms, or an alicyclic or aromatic hydrocarbon group having 6 to 10 carbon atoms, more preferably an alkylene group having 4 to 10 carbon atoms.

Examples of dicarboxylic acid compounds represented by the formula (4) include linear aliphatic dicarboxylic acids having 2 to 20 carbon atoms, such as oxalic acid, succinic acid, glutaric acid, adipic acid, pimelic acid, suberic acid, azelaic acid, sebacic acid, undecanedioic acid, and dodecanedioic acid; aliphatic dicarboxylic acids, such as a dimerized aliphatic dicarboxylic acid (dimer acid) having 14 to 48 carbon atoms obtained by dimerizing an unsaturated fatty acid obtained by fractional distillation of triglyceride, and a hydrogenation product thereof (hydrogenated dimer acid); alicyclic dicarboxylic acids, such as 1,3-/1,4-cyclohexanedicarboxylic acid, dicyclohexanemethane-4,4'-dicarboxylic acid, and norbornanedicarboxylic acid; and aromatic dicarboxylic acids, such as terephthalic acid, isophthalic acid, and 1,4-/2,6-/2,7-naphthalenedicarboxylic acid. These can be used individually or in combination.

The dicarboxylic acid compound represented by the formula (4) is preferably the above-mentioned aliphatic dicarboxylic acid or alicyclic dicarboxylic acid. With respect to the dimer acid and hydrogenated dimer acid, for example, trade names "Pripol 1004", "Pripol 1006", "Pripol 1009", and "Pripol 1013", manufactured by Uniqema, can be used.

In the polyamide elastomer, from the viewpoint of improving the crystalline properties of the polyamide component to surely achieve mechanical physical properties of the obtained polyamide elastomer, such as a strength and an elastic modulus, and to cause the polyamide elastomer to stably exhibit functions and performances as an elastomer, such as elastomeric properties and flexibility, the amount of constituent units 2 is preferably 5 to 85% by mass, more preferably 10 to 85% by mass, further preferably 15 to 85% by mass, further preferably 15 to 80% by mass, and the total amount of constituent units 1 and constituent units 3 is preferably 15 to 95% by mass, more preferably 15 to 90% by mass, further preferably 15 to 85% by mass, further preferably 20 to 85% by mass, based on the total mass of constituent units 1, constituent units 2, and constituent units 3 (100% by mass).

With respect to constituent units 1 and constituent units 3, the amino residue derived from the diamine compound represented by the formula (1) (including an amino group in another diamine compound if contained) and the carboxyl residue derived from the dicarboxylic acid compound represented by the formula (4) are preferably substantially equimolar to each other.

The molar ratio of the amino residue derived from the diamine compound represented by the formula (1) (including an amino group in another diamine compound if contained) and the carboxyl residue derived from the dicarboxylic acid compound represented by the formula (4) is preferably 45/55 to 55/45, more preferably 47/53 to 53/47, further preferably 49/51 to 51/49, further preferably 50/50.

When the polyamide elastomer has constituent units 1a derived from another diamine compound, from the viewpoint of surely achieving functions and performances of a composition containing the polyamide elastomer as an elastomer, such as stable elastomeric properties and flexibility, the content of constituent units 1 is preferably 50 to 100% by mass, more preferably 80 to 100% by mass, further preferably 90 to 100% by mass, based on the total mass of constituent units 1 and constituent units 1a.

Further, from the viewpoint of surely achieving stable transparency of a composition containing the polyamide elastomer, the content of constituent units 1a is preferably 0.5 to 10% by mass, more preferably 1 to 5% by mass, based on the mass of the polyamide elastomer.

With respect to constituent units 1, constituent units 2, and constituent units 3 in the polyamide elastomer, the measurement for qualitative analysis and quantitative determination can be made by a method generally used for evaluation of a polymer, such as liquid chromatography, gas chromatography, IR, or $^1$H-NMR, after the polyamide elastomer is hydrolyzed into monomers.

An example of a method for compositional analysis by hydrolysis is described below.

As an acid, for example, hydrobromic acid or hydrochloric acid which can selectively hydrolyze a polyamide is used.

The amount of the acid used is 50 to 100 ml relative to 0.1 g of the polyamide elastomer mixture.

For accelerating the hydrolysis, the polyamide elastomer mixture is used in the form of a powder, which is obtained by pulverizing the mixture by, for example, a freezing and pulverization method.

The temperature for hydrolysis is 100 to 130°C.

After the hydrolysis, insoluble substances are removed from the acid solution by filtration or centrifugal separation.

As a method for evaluating the solution separated, for example, high performance liquid chromatography (HPLC) or gas chromatography/mass spectroscopy (GC/MS) can be used.

For example, in the case of GC/MS, the measurement can be made using Model GCMS-QP5050A, manufactured by Shimadzu Corporation, as an analytical instrument, and using Ultra ALLOY+-1 (MS/HT) (0.25 $\phi \times$ 15 m, 0.15 $\mu$m) as a column under the following conditions: column temperature: 120 to 390°C (12°C /min hold); injection inlet temperature: 340°C; interface temperature: 340°C; carrier gas He introduced at 2.0 ml/min; ionization method (EI method at 70 eV); measuring range: 20 to 900; injection method: split method 1:8; and amount of sample per injection: 1 $\mu$l.

From the viewpoint of maintaining the tension of the molten elastomer being melt-spun or improving the mold release properties upon injection molding, the polyamide elastomer preferably has a relative viscosity as high as possible. When the viscosity of the polyamide elastomer is too high, not only does the productivity in the polymerization of the elastomer become poor, but also the fluidity of the molten elastomer is markedly lowered, making various thermoforming difficult. The polyamide elastomer preferably has a relative viscosity at 25°C of 1.9 or more, more preferably 1.9 to 3.5, further preferably 1.9 to 3.0, as measured at a concentration of 5 g/$dm^3$ in m-cresol as a solvent.

The polyamide elastomer has a terminal amino group concentration of $2.0 \times 10^{-5}$ eq/g or more, and, from the viewpoint of the dyeing properties, the terminal amino group concentration of the polyamide elastomer is preferably $2.0 \times 10^{-5}$ to $10.0 \times 10^{-5}$ eq/g, more preferably $4.0 \times 10^{-5}$ to $10.0 \times 10^{-5}$ eq/g. When the terminal amino group concentration of the polyamide elastomer is $2.0 \times 10^{-5}$ eq/g or more, the obtained polyamide elastomer composition is likely to be further improved in the dyeing properties and color fastness properties. Further, when the terminal amino group concentration is $10.0 \times 10^{-5}$ eq/g or less, it is likely that a satisfactory degree of polymerization can be achieved in the production of the polyamide elastomer. The polyamide elastomer having a terminal amino group concentration in the above-mentioned range can be obtained by, for example, conducting a polymerization reaction so that the molar ratio of the diamine to the dicarboxylic acid used is more than 1.

When the polymerization for the polyamide elastomer has proceeded while being well balanced, the terminal carboxyl group concentration of the polyamide elastomer is theoretically equivalent to that of the terminal amino group. However, when the balance in the polymerization is lost or a reaction is made to the end of polyamide for improving the dyeing properties, the terminal amino group concentration can be increased. From the viewpoint of the polymerization stability, the terminal carboxyl group concentration is preferably $2.0 \times 10^{-5}$ to $10 \times 10^{-5}$ eq/g, more preferably $3.0 \times 10^{-5}$ to $8.0 \times 10^{-5}$ eq/g.

When the polyamide elastomer composition is molded, in order to stabilize the injection molding or extrusion, an extruder may be provided with a filter or a filtering medium for the purpose of removing foreign matter in the material. Particularly, in a melt spinning method, for preventing the occurrence of yarn breakage during the spinning, generally, the upstream side of a spinning nozzle is filled with a filtering medium, such as glass beads or a metal powder, and further a wire mesh or sintered filter is arranged. This suppresses the occurrence of clogging of the nozzle or yarn breakage, making it possible to achieve stable spinning operation properties for a long time. However, as the amount of the materials captured by the filtering medium is increasing, the filtering medium is gradually clogged to increase the filtration pressure, causing a burden on the extruder, so that the spinning is inevitably stopped.

Examples of causes of clogging of the filter include aggregation of very small foreign matter mixed during the polymerization, carbides, unmelted substances in the polymer, or inorganic substances in the polymer. Particularly, metal-containing particles contained in the polymer as, for example, a polymerization catalyst or a matting agent are likely to suffer aggregation in the molten polymer to increase the filtration pressure, causing the spinning operation properties to be markedly poor. Therefore, it is necessary that the polymerization catalyst used in the polyamide elastomer composition contain no metal component, and be a phosphorous acid compound comprising phosphorous acid from the viewpoint of the stability of the polymerization reaction.

In the polyamide elastomer composition, the content of the phosphorous acid compound contained in the polyamide elastomer is 0.02 to 0.15% by mass. From the viewpoint of the stable catalytic reaction and moldability, the content of the phosphorous acid compound in the polyamide elastomer is preferably 0.02 to 0.07% by mass, more preferably 0.03 to 0.05% by mass. When the content of the phosphorous acid compound in the polyamide elastomer is 0.15% by mass or more, the acidity in the vessel during the polymerization for the polyamide elastomer disadvantageously becomes too high, so that the polymerization reaction is unlikely to proceed.

With respect to the phosphorous acid compound, at least one phosphorous acid compound selected from the group consisting of phosphorous acid, a phosphite, and a phosphonate is used. Phosphorous acid may be changed into phosphonic acid as a tautomer due to an effect of, for example, the hydrogen ion concentration of the solution. Examples of phosphites include sodium phosphite, magnesium phosphite, and calcium phosphite. Examples of phosphonates include trimethyl phosphonate, triethyl phosphonate, tripropyl phosphonate, triphenyl phosphonate, phenyl phosphonate, and phenylethyl phosphonate. A preferred phosphorous acid compound is phosphorous acid.

When melt spinning the polyamide elastomer in the present invention, the polyamide elastomer preferably contains the phosphorous acid compound in an amount of 0.02 to 0.07% by mass, more preferably 0.03 to 0.05% by mass. The timing of adding the phosphorous acid compound to the polyamide elastomer may be before start of the

polycondensation reaction, during the polycondensation reaction, or after completion of the polycondensation reaction, and is preferably before start of the polycondensation reaction. The phosphorous acid compound may be added to the reaction system in the form of, for example, a slurry or a solution obtained by dispersing or dissolving the compound in a liquid, such as water. Before performing melt spinning or injection molding, the phosphorous acid compound in an appropriate amount can be added to the polyamide elastomer so that the content of the phosphorous acid compound in the polyamide elastomer falls in the above-mentioned range.

The polyamide elastomer composition may contain, for example, a heat-resistant agent, an ultraviolet light absorber, a light stabilizer, an antioxidant, an antistatic agent, a lubricant, a slip agent, a crystal nucleating agent, a tackifier, a sealing property improving agent, an anti-fogging agent, a release agent, a plasticizer, a pigment, a dye, a perfume, a flame retardant, or a reinforcing material in such an amount that the properties of the polyamide elastomer composition are not sacrificed. Further, the polyamide elastomer composition may contain another thermoplastic resin, such as a polyamide other than the polyamide elastomer in the present embodiment, polyvinyl chloride, a polyurethane resin, or an acrylonitrile/butadiene/styrene copolymer (ABS). The polyamide elastomer has excellent compatibility with another thermoplastic resin, and, when blended with the above another thermoplastic resin, the polyamide elastomer can be improved in, for example, moldability, impact resistance, elastic properties, and flexibility.

The polyamide elastomer composition exhibits excellent dyeing properties and excellent color fastness properties. In coloring the polyamide elastomer composition, a conventionally known dye or pigment can be used, and examples include an acid dye, a metal-containing acid dye, a disperse dye, and a coloring pigment. From the viewpoint of, for example, the spinning operation properties, color development, and color fastness, the coloring material used in the polyamide elastomer fiber is especially preferably an acid dye and a metal-containing acid dye.

Examples of acid dyes and metal-containing acid dyes include dyes, such as azo, anthraquinone, pyrazolone, phthalocyanine, indigoid, and triphenylmethane dyes. With respect to the dyeing, a conventionally known dyeing machine and dyeing method are used, and there is no particular limitation. Further, an additive for improving the dyeing properties, such as a dyeing assistant, a level dying agent, or a pH adjustor, can be used.

In dyeing using an acid dye or a metal-containing acid dye, a main reaction of the dyeing is presumed such that anions caused by dissociation of the dye in the aqueous solution and cations derived from the amino group of the polyamide elastomer composition in the acid aqueous solution participate in the dyeing through ionic bonding. Further, hydrogen bonding and intermolecular force and others are presumed to contribute to the dying, and the mechanism of the dyeing is complicated.

[Molded body]

The polyamide elastomer composition can be used in a molded body. That is, the present invention encompasses a molded body comprising the polyamide elastomer composition. Examples of molded bodies include a fiber, a button for clothing, and a member constituting a slide fastener for clothing. A molding method for the molded body may be appropriately selected from methods generally used according to the type of the molded body. Accordingly, a preferred embodiment of the present invention is a dyed polyamide elastomer molded body.

When the polyamide elastomer composition is used in the molded body, the total content of the polyamide elastomer and phosphorous acid contained in the molded body is preferably 20 to 100% by mass, more preferably 30 to 100% by mass, more preferably 40 to 100% by mass, further preferably 50 to 100% by mass. Especially when the polyamide elastomer composition is formed into a fiber and used in, for example, sportswear, for fully utilizing the stretchability of the polyamide elastomer, the total content of the polyamide elastomer and phosphorous acid is preferably close to 100% by mass.

[Polyamide elastomer fiber]

The polyamide elastomer fiber according to the present embodiment comprises the polyamide elastomer composition. The polyamide elastomer fiber can be produced by, for example, melt spinning the polyamide elastomer composition. From the polyamide elastomer composition of the present invention, the polyamide elastomer fiber can be advantageously continuously produced by means of an industrial melt spinning apparatus.

The thickness of the polyamide elastomer fiber can be appropriately selected according to, for example, the purpose.

With respect to the form of the cross-section of the polyamide elastomer fiber, various forms of cross-sections, such as a circular cross-section, a triangular cross-section, a quadrangular cross-section, a polygonal cross-section, a flattened cross-section, and a hollow cross-section, can be used, and there is no particular limitation. The fiber can be formed from a composite of two or more components of polymers, and various configurations of fiber, such as a core-shell type, an island-in-sea type, a side-by-side type, and a split-yarn type, can be used.

The polyamide elastomer fiber has excellent dyeing properties and excellent color fastness properties, and

therefore is advantageously used in, for example, general clothes and sportswear application. Further, the polyamide elastomer fiber can be used in the form of, for example, a woven material, a knitted material, or nonwoven fabric. Accordingly, a preferred embodiment of the present invention is a dyed polyamide elastomer fiber.

[Button for clothing]

The button for clothing according to the present embodiment comprises the polyamide elastomer composition. The button for clothing can be produced by, for example, subjecting the polyamide elastomer composition to injection molding.

An injection molded article using the polyamide elastomer composition, such as a button for clothing, has excellent dyeing properties and excellent color fastness properties, and therefore is advantageously used in, for example, general clothes which are highly fashionable.

[Slide fastener for clothing]

The slide fastener for clothing according to the present embodiment has a member comprising the polyamide elastomer composition. Examples of members constituting the slide fastener, which are molded using the polyamide elastomer composition, include a coupling element (an element), a slider, a top stop, and a bottom stop of a slide fastener. The coupling element of the slide fastener may be in either an independent block form or a coil form. The member of the slide fastener can be produced by, for example, subjecting the polyamide elastomer composition to injection molding.

[Method for producing the polyamide elastomer fiber]

The method for producing the polyamide elastomer fiber comprises a polyamide elastomer production step for subjecting a diamine compound represented by the formula (1) above, an aminocarboxylic acid compound represented by the formula (2) above and/or a lactam compound represented by the formula (3) above, and a dicarboxylic acid compound represented by the formula (4) above to melt polymerization in the presence of phosphorous acid, and a spinning step for melt spinning a resin composition containing the obtained polyamide elastomer.

The polyamide elastomer in the present embodiment is obtained by subjecting monomers of a specific construction constituting the polyamide elastomer to melt polymerization in the presence of phosphorous acid, and therefore contains a smaller amount of inorganic particles and others which could cause an increase of the filtration pressure in the spinning step, making it possible to achieve excellent spinning operation properties. The precise mechanisms have not yet been elucidated, but it is presumed that when the resin composition containing the polyamide elastomer contains the phosphorous acid compound, an increase of the filtration pressure in a melt spinning method can be effectively suppressed.

In the polyamide elastomer production step, a diamine compound represented by the formula (1), an aminocarboxylic acid compound represented by the formula (2) and/or a lactam compound represented by the formula (3), and a dicarboxylic acid compound represented by the formula (4) are subjected to melt polymerization in the presence of phosphorous acid to produce a polyamide elastomer.

In the polyamide elastomer production step, monomers, which are selected from a diamine compound represented by the formula (1), an aminocarboxylic acid compound represented by the formula (2), a lactam compound represented by the formula (3), and a dicarboxylic acid compound represented by the formula (4), are mixed in such a charged proportion that an intended construction of the polyamide elastomer is achieved, obtaining a monomer mixture. The amount of the phosphorous acid charged is 0.02 to 0.15 part by mass, preferably 0.02 to 0.07 part by mass, more preferably 0.03 to 0.05 part by mass, relative to 100 parts by mass of the total of the monomer mixture.

The timing of adding phosphorous acid to the reaction system may be anytime between before start of the polycondensation reaction and during the reaction, and it is preferred that phosphorous acid is added to the reaction system immediately before start of the polycondensation reaction, or at or before a time when the relative viscosity of the reaction product has reached 1.2 after the polymerization reaction has proceeded because phosphorous acid in a relatively small amount flies out of the reaction system and the polymerization time or kneading time is relatively short. Phosphorous acid may be added to the reaction system in the form of, for example, a slurry or a solution obtained by dispersing or dissolving it in a liquid, such as water.

As an example of the polyamide elastomer production step, there can be used a method comprising the step of subjecting the monomer mixture to melt polymerization under a pressure and/or under atmospheric pressure and optionally further subjecting the resultant mixture to melt polymerization under a reduced pressure. There can be also used a method in which two components, i.e., an aminocarboxylic acid compound and/or a lactam compound and a dicarboxylic acid compound are first subjected to polymerization, and then the resultant product and a diamine compound as well as a phosphorous acid compound are subjected to polymerization.

In the polyamide elastomer production step, from the viewpoint of allowing the polymerization reaction to appropriately proceed and suppressing thermal decomposition so as to stably obtain a polymer having excellent physical properties, the polymerization temperature is preferably 150 to 300°C, more preferably 160 to 280°C, further preferably 180 to 250°C.

When an aminocarboxylic acid is used, the polyamide elastomer can be produced by a method comprising the step of melt polymerization under atmospheric pressure, or of melt polymerization under atmospheric pressure and the subsequent melt polymerization under a reduced pressure. On the other hand, when a lactam compound is used, the polyamide elastomer can be produced by a method comprising melt polymerization in the presence of an appropriate amount of water generally under a pressure of 0.1 to 5 MPa and the subsequent melt polymerization under atmospheric pressure and/or melt polymerization under a reduced pressure.

In the polyamide elastomer production step, from the viewpoint of stably securing an increase of the molecular weight and suppressing discoloration and others due to thermal decomposition so as to stably obtain a polyether amide elastomer having desired physical properties, the polymerization time can be, for example, 0.5 to 20 hours.

The polyamide elastomer production step may be performed in any of a batch-wise manner and a continuous manner, and a batch reaction vessel, a single-chamber or multi-chamber continuous reaction apparatus, a tubular continuous reaction apparatus and others can be used individually or appropriately in combination.

The polyamide elastomer production step can be also performed by making a reference to, for example, the description of Japanese Unexamined Patent Publication No. 2011-256464.

In the spinning step, a resin composition containing the obtained polyamide elastomer and a phosphorous acid compound is spun to produce a polyamide elastomer fiber. As a method for spinning the resin composition, a melt spinning method is preferred, and the resin composition can be spun using a conventionally known spinning method, such as a conventional method, a direct spinning stretching method, a melt blowing method, or an electrospinning method.

EXAMPLES

Hereinbelow, the present invention will be described in more detail with reference to the following Examples, which should not be construed as limiting the scope of the present invention.

[Evaluation method]

The measurement of physical properties and evaluation were conducted as described below.

1) Relative viscosity

A relative viscosity ($\eta r$) of a polyamide elastomer was measured in accordance with ISO 307. Specifically, a polyamide elastomer was dissolved in m-cresol at a concentration of 1 g/200 ml, and a relative viscosity was determined at a measurement temperature of 25°C by a solution viscosity method.

2) Terminal amino group concentration ($NH_2$)

About 1 g of a polyamide elastomer was dissolved in 40 mL of a phenol/methanol mixed solvent (volume ratio: 9/1), and Thymol Blue as an indicator was added to the obtained sample solution, and the resultant solution was subjected to titration using N/20 hydrochloric acid to measure a terminal amino group concentration $NH_2$ ($\times 10^{-5}$ eq/g).

3) Terminal carboxyl group concentration (COOH)

40 mL of benzyl alcohol was added to about 1 g of a polyamide elastomer, and the elastomer was dissolved by heating in a nitrogen gas atmosphere, and phenolphthalein as an indicator was added to the obtained sample solution, and the resultant solution was subjected to titration using an N/20 ethanol solution of potassium hydroxide to measure a terminal carboxyl group concentration COOH ($\times 10^{-5}$ eq/g).

4) Dyeing properties

With respect to the dyeing properties, a transmittance of the dyeing solution obtained after dyeing a cylindrically knitted material was evaluated. The obtained polyamide elastomer fiber was knitted by means of a cylinder-knitting machine having a cylinder diameter of 3.5 inches and a gauge number of 20. The resultant cylindrically knitted material was subjected to scouring treatment for 30 minutes using warm water at 80°C having added thereto 2 g/L of Senkanol LW-21 (manufactured by Senka Corporation) and 2 g/L of sodium carbonate. The cylindrically knitted material obtained

after the treatment was roughly dehydrated, followed by dyeing. As a dyeing solution, 1 L of an aqueous solution having 0.5% owf Optilan Golden Yellow MF-RC (manufactured by Archroma Japan, K.K.), 2.0% owf LYOGEN KSE LIQ. (manufactured by Nagase-OG Colors & Chemicals Co., Ltd.), and 1 g/L of 80% acetic acid was prepared. The cylindrically knitted material with a bath ratio of 1:20 was dipped into the prepared dyeing solution and subjected to dyeing treatment at 95°C for 40 minutes. The resultant cylindrically knitted material was satisfactorily squeezed and the dyeing solution was recovered, and pure water was added to the dyeing solution so that the volume of the resultant dyeing solution became 1 L. With respect to the resultant dyeing solution, a transmittance was measured at a wavelength of 535 nm by means of a spectrophotometer. The transmittance of the dyeing solution before the dyeing was taken as 100%, and a transmittance of the dyeing solution after the dyeing was determined by making a calculation. The higher the transmittance of the dyeing solution after the dyeing, the larger the amount of the dye which adsorbs on the fiber, and a higher transmittance of the dyeing solution after the dyeing is judged to indicate excellent dyeing properties.

5) Color fastness

With respect to a cylindrically knitted material sample prepared for the evaluation of the dyeing properties, a color fastness to washing was evaluated in accordance with JIS L 0844 A-2. With respect to white cloth for staining, two types of white cloths, i.e., a nylon cloth and a wool cloth were used.

6) Phosphorous acid compound content

With respect to the polyamide elastomer composition, the content of the phosphorous acid compound in the polyamide elastomer was measured as follows.

(1) Zinc oxide is added to 1 g (w) of pellets and the resultant mixture is incinerated to obtain phosphorus pentoxide.
(2) The obtained phosphorus pentoxide is dissolved in 25 ml of a 10% sulfuric acid solution.
(3) To the resultant phosphorus pentoxide solution are added 10 ml of an ammonium molybdate solution (which is a solution obtained by mixing 150 ml of concentrated sulfuric acid into 500 ml of water and dissolving 50 g of ammonium molybdate in the resultant mixture, and adding water so that the volume of the resultant solution becomes 1,000 ml), 5 ml of a 0.05% aqueous solution of sodium sulfite, and 5 ml of a hydroquinone solution (which is a solution obtained by dissolving 2.5 g of hydroquinone in 100 ml of water and adding 5 ml of concentrated sulfuric acid to the resultant solution, and adding water so that the volume of the resultant solution becomes 500 ml), and water is added so that the volume of the resultant solution becomes 100 ml.
(4) After 45 minutes, an absorbance at a wavelength of 655 nm is measured by means of a spectrophotometer. With respect to the reagent used, a blank test is preliminarily conducted, and the blank value is subtracted from the absorbance measured with respect to the sample.
(5) From a calibration curve which is preliminarily prepared, a phosphorus amount p is read.
(6) From the read phosphorus amount p, a phosphorous acid amount a is determined using the following equation.

$$a = p/30.97 \times 82 \text{ Content} = a/w \times 100\ (\%)$$

(Example 1)

Polyamide elastomer production step

Into a pressure vessel having a capacity of 70 liters and being equipped with a stirrer, a thermometer, a torque meter, a pressure gauge, a nitrogen gas introducing inlet, a pressure controller, and a polymer withdrawal outlet were charged 17.54 kg of 12-aminododecanoic acid (manufactured by Ube Industries, Ltd.), 0.30 kg of adipic acid (manufactured by Asahi Kasei Corporation), 2.09 kg of an XYX triblock polyether diamine (ELASTAMINE RT-1000, manufactured by HUNTSMAN Corporation), 0.06 kg of IRGANOX 245 (manufactured by BASF Japan Ltd.), and 0.004 kg of phosphorous acid (manufactured by Taihei Chemical Industrial Co., Ltd.). The vessel was purged with nitrogen gas satisfactorily, and then, while feeding nitrogen gas at 200 litters/hour, and while controlling the pressure in the vessel to be 0.05 MPa, the temperature was increased from room temperature to 230°C over one hour, and further, while maintaining the pressure in the vessel at 0.05, polymerization was conducted at 230°C.

An ampere value of the stirring power (stirring current value) was recorded with the passage of time, and a point in time when the ampere value of the stirring power had become larger by 0.2 A than the value at the time of start of the polymerization was determined as a polymerization end point. After completion of the polymerization, stirring was

stopped, and a colorless and transparent polymer in a molten state was withdrawn in a string form from the polymer withdrawal outlet, and water-cooled and then subjected to pelletization, obtaining pellets. The polymerization end point was found to be 250 minutes after the temperature in the vessel reached 230°C.

Spinning step

The obtained pellets were melt-spun by a conventionally known spinning method to obtain a polyamide elastomer fiber. Specifically, using a 40 mm single-screw extruder having a temperature set at 170°C, a molten resin was extruded using a gear pump into a spinning pack having sealed therein 50 g of glass beads (roundness: 0.95; average particle diameter: 100 μm) and a sintered filter having a filter diameter of 50 μm. The molten resin was subjected to cooling step and oiling step and then wound at a spinning rate of 600 m/minute and at a stretch rate of 1,300 m/minute to obtain a fiber of 140 dtex/24 filaments.

Spinning was performed continuously for 12 hours. As a result, the increase ($\Delta P$) of the resin pressure gauge disposed between the gear pump and the spinning pack after 12 hours was found to be 0.5 MPa, which indicates that stable spinning operation properties were exhibited.

(Comparative Example 1)

Polymerization was conducted in substantially the same manner as in Example 1 except that, in the polyamide elastomer production step, instead of phosphorous acid, 0.004 kg of sodium hypophosphite (manufactured by Taihei Chemical Industrial Co., Ltd.) was charged, obtaining pellets.

The obtained pellets were melt-spun in the same manner as in the spinning step in Example 1. As a result, 3 hours after the start of spinning, the resin pressure gauge rapidly increased, and the increase ($\Delta P$) of the resin pressure gauge was more than 10 MPa 4 or less hours after the start of spinning, and there was a danger that the extruder could break, and therefore the melt spinning was stopped.

(Examples 2 to 4 and Comparative Examples 2 and 3)

Polymerization was individually conducted in substantially the same manner as in Example 1 except that, in the polyamide elastomer production step, the amount of the phosphorous acid charged was changed as shown in the table below, and that a time point 250 minutes after the temperature in the vessel reached 230°C was determined as the polymerization end point, obtaining pellets.

When conducting the polymerization, the stirring current value at the time of start of the polymerization was subtracted from the stirring current value at the polymerization end point to confirm an increase of the stirring current value. Generally, there is a tendency that as the degree of polymerization is increased, the stirring current value is increased. Therefore, the increase of the stirring current value is used as an index for controlling the degree of polymerization. The results are shown in Table 1.

Then, using the obtained pellets, spinning was performed by the same method as in the "Spinning step" described above in Example 1.

[Table 1]

| | Comparative Example 1 | Comparative Example 2 | Example 1 | Example 2 | Example 3 | Example 4 | Comparative Example 3 |
|---|---|---|---|---|---|---|---|
| Phosphorous acid (%) | - | 0.01 | 0.02 | 0.05 | 0.07 | 0.15 | 0.16 |
| Sodium hypophosphite(%) | 0.02 | - | - | - | - | - | - |
| $\eta$ r (-) | 1.86 | 1.92 | 1.98 | 2.09 | 2.05 | 2.00 | 1.91 |
| $NH_2$ ($\times 10^{-5}$eq/g) | 3.3 | 2.9 | 3.0 | 3.2 | 3.1 | 3.0 | 2.9 |
| Increase of stirring current value (A) | 0.20 | 0.13 | 0.22 | 0.50 | 0.33 | 0.20 | 0.11 |
| Increase $\Delta$P of resin pressure gauge during melt spinning (MPa) | Cannot be spun | 0.4 | 0.5 | 0.6 | 0.5 | 0.5 | 0.4 |

In Comparative Example 1, the degree of polymerization was increased and the pellets were obtained, but stable melt spinning was not able to be done as mentioned above. In Comparative Example 2 in which the amount of the phosphorous acid added is small, the stirring current value was low and the molecular weight was not increased. The reason for this is presumed that the catalytic effect is unsatisfactory. Further, in Comparative Example 3 in which the amount of the phosphorous acid added is large, similarly, the stirring current value was low and the molecular weight was not increased. The reason for this is presumed that excess phosphorous acid increased the acidity to inhibit the polymerization.

On the other hand, in Examples 1 to 4, the degree of polymerization was easily increased and the productivity was excellent. Particularly, in Example 2, the increase of the stirring current value was large, and the polymerization time was expected to be shortened, and thus excellent results were obtained. Further, in Examples 1 to 4, as can be seen from the fact that the increase of the resin pressure gauge during the melt spinning was small, continuous melt spinning was able to be advantageously performed without increasing the driving resistance of the melt spinning apparatus.

(Examples 5 and 6 and Comparative Example 4)

The dyeing properties were checked when the amino terminal group concentration was changed. In Comparative Example 4, a polyamide elastomer was obtained in accordance with substantially the same procedure as in Example 1 except that, in the polyamide elastomer production step, the amount of the adipic acid added was changed to 0.39 kg. In Example 5, a polyamide elastomer was obtained by the same method as in Example 1. In Example 6, a polyamide elastomer was obtained in accordance with substantially the same procedure as in Example 1 except that the amount of the ELASTAMINE RT-1000 added was changed to 3.00 kg. Further, the above-obtained polyamide elastomer was melt-spun in accordance with the spinning step in Example 1 to obtain a polyamide elastomer fiber. Using the obtained fiber, a cylindrically knitted material was formed, and the dyeing properties and color fastness properties were evaluated in accordance with the above-mentioned evaluation methods. The results of the evaluation are shown in Table 2.

[Table 2]

| | | Comparative Example 4 | Example 5 | Example 6 |
|---|---|---|---|---|
| η r (-) | | 1.78 | 1.96 | 1.90 |
| $NH_2$ (× $10^{-5}$eq/g) | | 0.8 | 2.8 | 8.2 |
| COOH (× $10^{-5}$eq/g) | | 7.7 | 4.5 | 1.2 |
| Dyeing properties | Transmittance | 104% | 107% | 113% |
| Color fastness | Color fading | Class 4 | Class 5 | Class 5 |
| | Staining (Ny) | Class 4 | Class 5 | Class 5 |
| | Staining (Cotton) | Class 4 | Class 5 | Class 5 |

The color fastness was evaluated in accordance with the description of "5. Color fastness". As a result, the color fastness of the cylindrically knitted material in Comparative Example 4 was Class 4, but the evaluation of the color fading of the cylindrically knitted materials in Examples 5 and 6 was as excellent as Class 5. Further, the staining evaluation of the cylindrically knitted material in Comparative Example 4 was as low as Class 4, whereas the staining evaluation of the cylindrically knitted materials in Examples 5 and 6 was Class 5 for both nylon white cloth and wool white cloth, and thus excellent dyeing properties were maintained.

(Example 7)

An elastomer in the form of pellets prepared in accordance with Example 1 was dried in a vacuum dryer at 80°C for 24 hours so that the moisture content of the pellets became 0.1% or less. Using the dried pellets, a circular button for clothing having a radius of 10 mm and a thickness of 2 mm was formed using an injection molding machine. The button was dyed in accordance with the above-mentioned evaluation for dyeing properties, and a transmittance was evaluated. As a result, the transmittance was 108%, which indicates that the dyeing properties were excellent. Further, the fastness was evaluated in accordance with the above-mentioned evaluation method for color fastness. With respect to the button after the washing, the degree of color fading from the button before the washing was checked by visual evaluation, and the result of the evaluation was Class 4. The evaluation of the dyeing properties and the evaluation of the color fastness were made in accordance with the above-mentioned test with respect to the button instead of the

cylindrically knitted material.

(Example 8)

An elastomer in the form of pellets prepared in accordance with Example 4 was dried in a vacuum dryer at 80°C for 24 hours so that the moisture content of the pellets became 0.1% or less. Using the dried pellets, a circular button for clothing having a radius of 10 mm and a thickness of 2 mm was formed using an injection molding machine. The button was dyed in accordance with the above-mentioned evaluation for dyeing properties, and a transmittance was evaluated. As a result, the transmittance was 108%, which indicates that the dyeing properties were excellent. Further, the fastness was evaluated in accordance with the above-mentioned evaluation method for color fastness. With respect to the button after the washing, the degree of color fading from the button before the washing was checked by visual evaluation, and the result of the evaluation was Class 4. The evaluation of the dyeing properties and the evaluation of the color fastness were made in accordance with the above-mentioned test with respect to the button instead of the cylindrically knitted material.

(Example 9)

An elastomer in the form of pellets prepared in accordance with Example 6 was dried in a vacuum dryer at 80°C for 24 hours so that the moisture content of the pellets became 0.1% or less. Using the dried pellets, a circular button for clothing having a radius of 10 mm and a thickness of 2 mm was formed using an injection molding machine. The button was dyed in accordance with the above-mentioned evaluation for dyeing properties, and a transmittance was evaluated. As a result, the transmittance was 112%, which indicates that the dyeing properties were excellent. Further, the fastness was evaluated in accordance with the above-mentioned evaluation method for color fastness. With respect to the button after the washing, the degree of color fading from the button before the washing was checked by visual evaluation, and the result of the evaluation was Class 4. The evaluation of the dyeing properties and the evaluation of the color fastness were made in accordance with the above-mentioned test with respect to the button instead of the cylindrically knitted material.

(Example 10)

An elastomer in the form of pellets prepared in accordance with Example 1 was dried in a vacuum dryer at 80°C for 24 hours so that the moisture content of the pellets became 0.1% or less. Using the dried pellets, a fastener element for man's pants having a whole length of 100 mm was formed using an injection molding machine. The fastener element was dyed in accordance with the above-mentioned evaluation for dyeing properties, and a transmittance was evaluated. As a result, the transmittance was 108%, which indicates that the dyeing properties were excellent. Further, the fastness was evaluated in accordance with the above-mentioned evaluation method for color fastness. With respect to the fastener element after the washing, the degree of color fading from the fastener element before the washing was checked by visual evaluation, and the result of the evaluation was Class 4. The evaluation of the dyeing properties and the evaluation of the color fastness were made in accordance with the above-mentioned test with respect to the fastener element instead of the cylindrically knitted material.

(Example 11)

An elastomer in the form of pellets prepared in accordance with Example 4 was dried in a vacuum dryer at 80°C for 24 hours so that the moisture content of the pellets became 0.1% or less. Using the dried pellets, a fastener element for man's pants having a whole length of 100 mm was formed using an injection molding machine. The fastener element was dyed in accordance with the above-mentioned evaluation for dyeing properties, and a transmittance was evaluated. As a result, the transmittance was 107%, which indicates that the dyeing properties were excellent. Further, the fastness was evaluated in accordance with the above-mentioned evaluation method for color fastness. With respect to the fastener element after the washing, the degree of color fading from the fastener element before the washing was checked by visual evaluation, and the result of the evaluation was Class 4. The evaluation of the dyeing properties and the evaluation of the color fastness were made in accordance with the above-mentioned test with respect to the fastener element instead of the cylindrically knitted material.

(Example 12)

An elastomer in the form of pellets prepared in accordance with Example 6 was dried in a vacuum dryer at 80°C for 24 hours so that the moisture content of the pellets became 0.1% or less. Using the dried pellets, a fastener

element for man's pants having a whole length of 100 mm was formed using an injection molding machine. The fastener element was dyed in accordance with the above-mentioned evaluation for dyeing properties, and a transmittance was evaluated. As a result, the transmittance was 111%, which indicates that the dyeing properties were excellent. Further, the fastness was evaluated in accordance with the above-mentioned evaluation method for color fastness. With respect to the fastener element after the washing, the degree of color fading from the fastener element before the washing was checked by visual evaluation, and the result of the evaluation was Class 4. The evaluation of the dyeing properties and the evaluation of the color fastness were made in accordance with the above-mentioned test with respect to the fastener element instead of the cylindrically knitted material.

The whole of the disclosure of Japanese Patent Application No. 2016-032233 (filing date: February 23, 2016) is included in the present specification by making a reference to it.

All the reference documents, patent applications, and technical standards described in the present specification are included in the present specification by making a reference to them to the same extent as that in the case where each of the reference documents, patent applications, and technical standards is specifically and individually shown to be included in the present specification by making a reference to each of them.

## Claims

1. A polyamide elastomer composition comprising a polyamide elastomer and a phosphorous acid compound,
the polyamide elastomer comprising constituent units 1 derived from a diamine compound represented by the formula (1) below, constituent units 2 derived from an aminocarboxylic acid compound represented by the formula (2) below or a lactam compound represented by the formula (3) below, and constituent units 3 derived from a dicarboxylic acid compound represented by the formula (4) below,
wherein the content of the phosphorous acid compound in the polyamide elastomer is 0.02 to 0.15% by mass, and the polyamide elastomer has a terminal amino group concentration of $2.0 \times 10^{-5}$ eq/g or more:

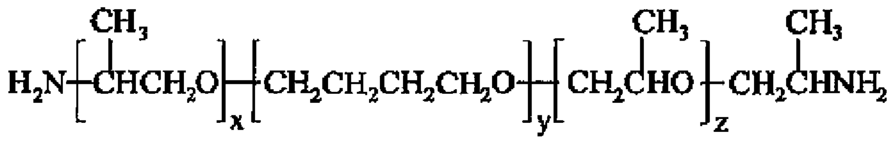

(1)

$H_2N-R^1-COOH$ (2)

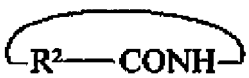

(3)

$HOOC-(R^3)_m-COOH$ (4)

wherein x represents an integer of 1 to 20, y represents an integer of 4 to 50, z represents an integer of 1 to 20, $R^1$ represents a linking group comprising a hydrocarbon chain, $R^2$ represents a linking group comprising a hydrocarbon chain, $R^3$ represents a linking group comprising a hydrocarbon chain, and m represents 0 or 1.

2. The polyamide elastomer composition according to claim 1, wherein the content of the constituent units 2 in the polyamide elastomer is 5 to 85% by mass.

3. The polyamide elastomer composition according to claim 1 or 2, wherein the phosphorous acid compound is phosphorous acid.

4. A polyamide elastomer molded body comprising the polyamide elastomer composition according to any one of claims 1 to 3.

5. A polyamide elastomer fiber comprising the polyamide elastomer composition according to any one of claims 1 to 3.

6. A button for clothing comprising the polyamide elastomer composition according to any one of claims 1 to 3.

**7.** A slide fastener for clothing having a member comprising the polyamide elastomer composition according to any one of claims 1 to 3.

**8.** Use of the polyamide elastomer composition according to any one of claims 1 to 3 for continuous melt spinning.

**9.** A method for producing the polyamide elastomer fiber according to claim 4, the method comprising:

subjecting a diamine compound represented by the formula (1) below, an aminocarboxylic acid compound represented by the formula (2) below and/or a lactam compound represented by the formula (3) below, and a dicarboxylic acid compound represented by the formula (4) below to melt polymerization in the presence of a phosphorous acid compound to obtain a polyamide elastomer, and
melt spinning a resin composition containing the obtained polyamide elastomer:

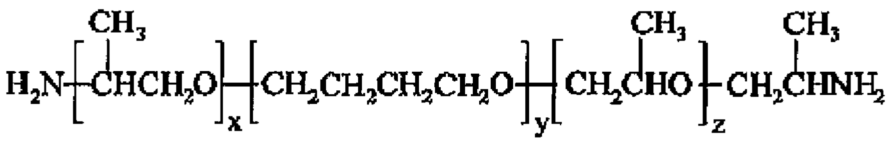
(1)

$H_2N-R^1-COOH$ (2)

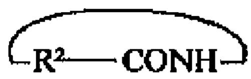
(3)

$HOOC-(R^3)_m-COOH$ (4)

wherein x represents an integer of 1 to 20, y represents an integer of 4 to 50, z represents an integer of 1 to 20, $R^1$ represents a linking group comprising a hydrocarbon chain, $R^2$ represents a linking group comprising a hydrocarbon chain, $R^3$ represents a linking group comprising a hydrocarbon chain, and m represents 0 or 1.

**10.** The method for producing the polyamide elastomer fiber according to claim 9, wherein the content of the phosphorous acid compound in the polyamide elastomer is 0.02 to 0.15% by mass.

**11.** The method for producing the polyamide elastomer fiber according to claim 9 or 10, wherein the phosphorous acid compound is phosphorous acid.

**12.** The method for producing the polyamide elastomer fiber according to any one of claims 9 to 11, wherein the polyamide elastomer has a terminal amino group concentration of $2.0 \times 10^{-5}$ eq/g or more.

**INTERNATIONAL SEARCH REPORT**

International application No.
PCT/JP2017/006288

A. CLASSIFICATION OF SUBJECT MATTER
*C08L77/00*(2006.01)i, *A44B1/02*(2006.01)i, *A44B19/16*(2006.01)i, *C08G69/40*(2006.01)i, *C08K3/32*(2006.01)i, *D01F6/60*(2006.01)i

According to International Patent Classification (IPC) or to both national classification and IPC

B. FIELDS SEARCHED

Minimum documentation searched (classification system followed by classification symbols)
C08L77/00, A44B1/02, A44B19/16, C08G69/40, C08K3/32, D01F6/60

Documentation searched other than minimum documentation to the extent that such documents are included in the fields searched
Jitsuyo Shinan Koho 1922-1996 Jitsuyo Shinan Toroku Koho 1996-2017
Kokai Jitsuyo Shinan Koho 1971-2017 Toroku Jitsuyo Shinan Koho 1994-2017

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2011-256364 A (Ube Industries, Ltd.), 22 December 2011 (22.12.2011), claims; paragraph [0007]; example 3 & TW 201239004 A claims; page 6, lines 11 to 17; example 3 | 1-12 |
| Y | WO 2012/070377 A1 (Mitsubishi Gas Chemical Co., Inc.), 31 May 2012 (31.05.2012), claims; paragraph [0031] & US 2013/0184431 A1 claims; paragraphs [0048] to [0049] & EP 2644637 A1 & CN 103180363 A & KR 10-2013-0049830 A | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 May 2017 (01.05.17) | 16 May 2017 (16.05.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No.
PCT/JP2017/006288

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2014-037470 A (Mitsubishi Gas Chemical Co., Inc.),<br>27 February 2014 (27.02.2014),<br>claims; paragraph [0072]<br>& US 2015/0218731 A1<br>claims; paragraphs [0141] to [0142]<br>& EP 2886687 A1 & KR 10-2015-0042194 A<br>& CN 104583473 A | 5,8-12<br>1-4,6-7 |
| A | JP 2003-286341 A (Ube Industries, Ltd.),<br>10 October 2003 (10.10.2003),<br>(Family: none) | 1-12 |
| A | JP 2004-161964 A (Ube Industries, Ltd.),<br>10 June 2004 (10.06.2004),<br>& US 2003/0144462 A1 & EP 1314750 A1 | 1-12 |
| A | JP 2014-198779 A (Bridgestone Corp.),<br>23 October 2014 (23.10.2014),<br>& US 2016/0039973 A1 & EP 2980120 A1<br>& CN 105189610 A | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI108324 B
- JP 2003221493 A
- JP 2011256364 A
- JP 2011256464 A
- JP 2016032233 A